# EUROPÄISCHE PATENTANMELDUNG

(11) **EP 2 728 085 A1**
(43) Veröffentlichungstag der Anmeldung: **07.05.2014**
(21) Anmeldenummer: 12191396.6
(22) Anmeldetag: 06.11.2012
(51) Int. Cl.: E04D 5/14, E04D 15/04, H05B 6/14, B29C 65/00

(54) **Verfahren zur Herstellung eines Flachdaches und Schweissroboter**

(71) Anmelder: Sika Technology AG, 6340 Baar (CH)
(72) Erfinder: Bleibler, Matthias, 8408 Winterthur (CH)
(74) Vertreter: Sika Patent Attorneys

(57) **Zusammenfassung**

Verfahren zur Herstellung einer abgedichteten Fläche eines Bauwerkes, die Kunststoffbahnen aufweist, die durch Befestiger mit jeweils einer thermoplast- oder hotmelt-beschichteten Druckscheibe auf einer Tragkonstruktion fixiert sind, wobei zur Verschweißung der Kunststoffbahnen mit den Druckscheiben ein Schweißroboter eingesetzt wird, der mindestens innerhalb einer Kunststoffbahn selbsttätig die Druckscheiben detektiert, zu diesen hin fährt, eine Schweißeinrichtung relativ zu den Druckscheiben positioniert und die Verschweißung ausführt und optional die Schweißstelle für eine vorbestimmte Zeitspanne mechanisch belastet und zugleich kühlt.

## Beschreibung

### Technisches Gebiet

Die Erfindung betrifft ein Verfahren zur Herstellung einer abgedichteten Fläche eines Bauwerkes, die Kunststoffbahnen aufweist, die durch Befestiger mit jeweils einer thermoplast- oder hotmelt-beschichteten Druckscheibe auf einer Tragkonstruktion fixiert sind. Sie betrifft des Weiteren einen Schweißroboter, der zur Durchführung dieses Verfahrens geeignet ist.

### Stand der Technik

Flachdächer sind ein massenweise hergestellter Bestandteil moderner Gebäude, sowohl von hallenartigen Industrie-, Handels- oder Kulturbauten, als auch von Büro- und Wohnhäusern. Ihre Herstellung nach dem Stand der Bautechnik erfordert die Anbringung einer hocheffektiven Wärmedämmung und einer sicheren Abdichtung, die allen relevanten Beanspruchungen, insbesondere auch erheblichen Sogkräften bei hohen Windstärken, standhalten.

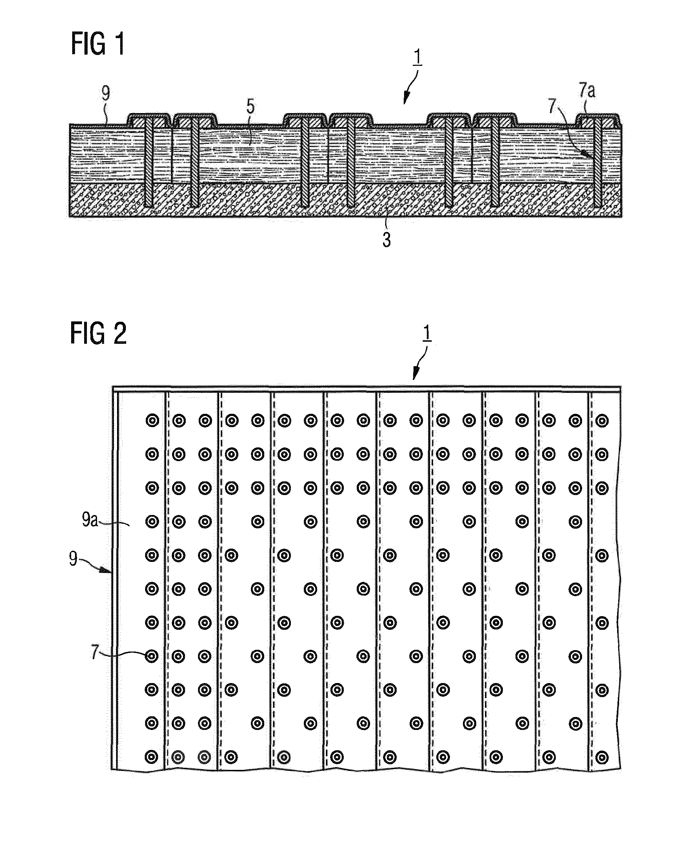

Fig. 1 zeigt schematisch in Art einer Querschnittsdarstellung einen solchen Anforderungen genügenden Aufbau eines Flachdaches 1. Hiernach umfasst das Flachdach 1 eine auf einer Tragkonstruktion 3 flächig aufgebrachte Wärmedämmung 5, die mittels punktuell angebrachten Befestigern 7, die jeweils eine auf der Oberfläche der Wärmedämmung liegende Druckscheibe 7a umfassen, auf der Tragkonstruktion 3 gesichert ist. Über der Wärmedämmung 5 und den Druckscheiben 7a der Befestiger 7 ist eine Abdichtung 9 aus miteinander sowie mit den Druckscheiben 7a verschweißten Kunststoffbahnen vorgesehen. Die Druckscheiben 7a sind thermoplast- oder hotmelt-beschichtet und hierdurch mittels eines Induktionsschweißvorganges mit den Kunststoffbahnen verschweißbar.

Das Hauptproblem des Montageprozesses der Abdichtungsfolie stellt das Verschweißen mit den Befestigern dar. Da zum Zeitpunkt des Schweißens bereits die gesamte Folie auf dem Dach ausgebreitet ist, lassen sich die Befestiger optisch nicht mehr detektieren. Um die Befestiger zu finden und zu verschweißen existieren bereits Lösungen und Geräte. Die Anwendung dieser Geräte hat jedoch einige Schwachstellen: Bei sämtlichen Geräten muss ein Montageingenieur das Induktionsschweißgerät manuell über den Befestigern positionieren. Zum Teil wird dies durch eine eingebaute Sensorik oder durch Magnetkräfte erleichtert. Trotz dieser kleinen Hilfen ist jedoch bei allen vorhandenen Geräten der Zeitaufwand für die Detektierung und die Positionierung enorm. Dazu kommt, dass die vorhandenen Geräte keine Qualitätskontrolle der Schweißung durchführen. Somit ist nicht sichergestellt, dass sämtliche Befestiger hinreichend verschweißt sind. Aus diesem Grund wird die Anzahl der eingesetzten Befestiger um einen Sicherheitsfaktor erhöht, was einen nicht zu unterschätzenden Kostenfaktor darstellt.

### Darstellung der Erfindung

Der Erfindung liegt daher die Aufgabe zugrunde, ein verbessertes, insbesondere produktiveres und somit kostengünstigeres Verfahren der genannten Art bereitzustellen. Des Weiteren soll ein Schweißroboter angegeben werden, der zur Durchführung des Verfahrens geeignet ist.

Diese Aufgabe wird in ihrem Verfahrensaspekt durch ein Verfahren mit den Merkmalen des Anspruchs 1 und in ihrem Vorrichtungsaspekt durch einen Schweißroboter mit den Merkmalen des Anspruchs 8 gelöst. Zweckmäßige Fortbildungen des Erfindungsgedankens sind Gegenstand der abhängigen Ansprüche.

Die Erfindung geht von der Überlegung aus, bekannte Verfahren zur Herstellung eines Bauwerkes insoweit zu automatisieren, dass eine automatisierte Qualitätskontrolle ermöglicht und zugleich bau-typischen Besonderheiten des Herstellungsprozesses, die sich von denjenigen einer Industrieproduktion unterscheiden, hinreichend Rechnung getragen wird. Der nahelegende Gedanke eines Versehens der Kunststoffbahnen mit einem auf eine exakt-vorgegebene Befestiger-Anordnung abgestimmten lokalen Klebstoffauftrag war daher ebenso zu verwerfen wie die Steuerung eines Schweißprozesses mit aus den Konstruktionszeichnungen abgeleiteten Befestiger-Koordinaten.

Vielmehr gehört zur Erfindung der Gedanke, dass zur Verschweißung der Kunststoffbahnen mit den Druckscheiben ein Schweißroboter eingesetzt wird, der mindestens innerhalb einer Kunststoffbahn selbsttätig die Druckscheiben detektiert und zu diesen hin fährt. Des Weiteren umfasst die Erfindung den Aspekt, dass eine Schweißeinrichtung relativ zu den Druckscheiben positioniert wird und in dieser Position die Verschweißung ausführt. Schließlich ist als Option vorgesehen, dass der Schweißroboter die Schweißstelle für eine vorbestimmte Zeitspanne mechanisch belastet und zugleich kühlt und damit die Verschweißung kontrolliert fertig stellt.

Das vorgeschlagene Verfahren ist aus derzeitiger Sicht primär zur Herstellung von Flachdächern vorgesehen, eignet sich aber auch für andere Bauwerke oder Bauwerksteile, wie etwa Schwimmbäder, Teichanlagen oder Deponien.

In einer Ausführung ist es vorgesehen zur Herstellung eines Flachdaches, das eine Wärmedämmung mit Dämmplatten und eine über den Dämmplatten und Druckscheiben der Befestiger liegende Abdichtung aus mit den Druckscheiben verschweißten Kunststoffbahnen aufweist.

Im einfachsten Falle erfolgt das selbsttätige Navigieren in den Grenzen eines vorgegebenen Bereiches, beispielsweise beschränkt auf die Breite einer einzelnen Kunststoffbahn, während das Umsetzen von Bahn zu Bahn manuell erfolgen kann. In einer weiter entwickelten Lösung ist aber auch ein bahn-übergreifendes Navigieren und damit grundsätzlich eine automatische Realisierung sämtlicher Schweißverbindungen eines gesamten Flachdaches möglich. Es versteht sich, dass die Navigations-Signale in Steuerbefehle für mindestens ein gelenktes Rad oder eine gelenkte Raupe des Schweißroboters umzusetzen sind; hierfür gibt es aber Algorithmen, auf die der Fachmann zurückgreifen kann und die dafür hier keiner genaueren Beschreibung bedürfen.

In einer zweckmäßigen Ausführung ist des Weiteren vorgesehen, dass eine Qualitätskontrolle der Schweißverbindungen selbsttätig ausgeführt wird. Hierdurch ergibt sich eine weitere Fertigungszeit-Einsparung, die im Hinblick auf die für eine Qualitätsprüfung erforderliche Qualifikation der eingesetzten Arbeitskräfte in besonderem Maße kostenwirksam ist. In einer Ausgestaltung dieser Ausführung wird selbsttätig die Schweißtemperatur und an mehreren Stellen jeder Druckscheibe der Anpressdruck der Schweißeinrichtung erfasst und ausgewertet. Noch wichtiger kann es sein; dass der Anpressdruck und die Temperatur beim Abkühlen erfasst werden.

In alternativen Ausgestaltungen ist vorgesehen, dass entweder (a) selbsttätig die jeweilige Schweißstelle auf Zug belastet und eine Zugbelastungskennlinie erfasst und ausgewertet oder (b) der Befestiger akustisch oder mechanisch zu Schwingungen angeregt und das Schwingungsverhalten ausgewertet oder (c) vor sowie nach der Schweißung die Dicke der Kunststofffolie über dem Befestiger gemessen und die Differenz beider Werte ausgewertet wird. Weitere alternative Qualitätsprüfverfahren für Kunststoff-Schweißstellen sind grundsätzlich ebenso einsetzbar, sofern sie von einer Oberfläche einer die Schweißstelle überdeckenden Materialbahn mit hinreichender Aussagekraft ausführbar sind.

In einer weiteren Ausführung der Erfindung ist vorgesehen, dass prozessrelevante Daten, insbesondere zu den Koordinaten der Schweißstellen und zur Qualität der Schweißverbindungen, im Schweißroboter zur Nachverarbeitung aufbereitet gespeichert werden. Diese Funktion beinhaltet die Datenverarbeitung bevorzugt sämtlicher zu Qualitätssicherungs- und Nachweiszwecken erforderlicher Daten, welche während des Prozesses gesammelt wurden, und deren Ausgabe, insbesondere in Form eines Protokolls welches als Abnahmeprotokoll des Flachdaches dienen kann. Dank dieser Funktion kann eine nochmals höhere Wertschöpfung erzielt werden.

Die vorgeschlagene Minimalkonfiguration sieht vor, dass der Schweißroboter zum Navigieren, d. h. zum Auffinden der Befestiger, mindestens in den Bereichsgrenzen einer einzelnen Kunststoffbahn ausgebildet ist. In einer weiteren Ausführung, die einen höheren Automatisierungsgrad besitzt, ist vorgesehen, dass der Schweißroboter selbsttätig an einem Kunststoffbahn-Ende zu einer benachbarten Kunststoffbahn fährt. Hierbei ist somit eine selbstständige Navigation- und Bewegungssteuerung prinzipiell über eine gesamte Flachdachfläche möglich.

In einer aus derzeitiger Sicht zweckmäßigen Ausführung erfolgt das Fügen beim vorgeschlagenen Verfahren mittels Induktionsschweißen, grundsätzlich sind im Rahmen des Verfahrensablaufs aber auch Fügeschritte anderer Art möglich.

Vorrichtungsaspekte der Erfindung ergeben sich weitgehend in Analogie zu den oben erwähnten Verfahrensaspekten, so dass eine Wiederholung hier nicht erforderlich ist. Dies betrifft beispielsweise das Vorsehen einer geeigneten Navigationseinrichtung zum Auffinden der Befestiger unterhalb der Dachabdichtung und einer geeigneten Lenkung mindestens eines Rades oder einer Raupe des Schweißroboter-Fahrwerks. Gerätetechnische Realisierungen dieser Vorrichtungsaspekte der Erfindung sind im Stand der Technik grundsätzlich verfügbar und müssen daher hier nicht genauer beschrieben werden.

Der Schweißroboter verfügt optional über eine Anpress- und Kühleinrichtung zum Ausüben eines Anpressdrucks auf Schweißstellen zwischen der Materialbahn und jeweils einem darunter liegenden Element und zum Kühlen derselben, mit einer Zeitsteuerung zur Steuerung einer Anpress- und Kühlzeitspanne. Es sind aber auch Ausführungen denkbar, die ohne eine spezielle Anpress- und Kühleinrichtung auskommen, bei denen also z. B. allein das Gewicht des Roboters, das vorübergehend auf einer Schweißstelle lastet, für ein hinreichendes Anpressen der Kunststoffbahn an den Befestiger sorgt oder bei denen ein solches Anpressen und/oder eine aktive Kühlung aufgrund spezieller Wahl von Materialien und Schweißparametern verzichtbar ist.

Des Weiteren soll darauf hingewiesen werden, dass der vorgeschlagene Schweißroboter bevorzugt mit Mitteln zur selbsttätigen Qualitätskontrolle der Schweißverbindungen ausgestattet ist, welche insbesondere einen Temperaturfühler zur Erfassung der Schweißtemperatur und mindestens einen, bevorzugt mehrere Druckfühler zur Erfassung des Anpressdruckes an der Materialbahn über jeweils einem schweißbaren Element sowie eine mit dem Temperaturfühler und dem oder jedem Druckfühler verbundene Auswertungseinrichtung zur kombinierten Auswertung der Temperatur- und Drucksignale gemäß einem vorgespeicherten Qualitätsbestimmungsalgorithmus aufweisen.

Des Weiteren ist, im Sinne einer Verfahrensführung mit selbsttätiger Qualitätssicherung, die Schweißeinrichtung insbesondere als Induktionsschweißeinrichtung ausgebildet, der Temperatursteuermittel zur Steuerung der Schweißtemperatur, eine Zeitsteuerung zur Steuerung der Schweißdauer sowie eine steuerbare Anpresseinrichtung zur Erzeugung eines steuerbaren Anpressdruckes der Schweißeinrichtung zugeordnet sind. Speziell weist hierbei die Zeitsteuereinrichtung Berechnungsmittel zur Berechnung der Schweißdauer aufgrund von Temperatursignalen eines Temperaturfühlers zur Erfassung der Schweißtemperatur auf.

In einer weiteren bevorzugten Ausführung umfasst der Schweißroboter Daten-Aufbereitungsmittel zur Aufbereitung prozessrelevanter Daten, insbesondere zur Position der Schweißstellen und zur Qualitätskontrolle, und zu deren Speicherung im Schweißroboter sowie einer Schnittstelle zur Ausgabe der gespeicherten Daten.

In einer weiteren Ausführung des vorgeschlagenen Schweißroboters sind die Grob-Detektormittel des Navigationssystems als roboter-lokale Messmittel zur Positionserfassung der Elemente durch Induktion, mechanische Abtastung oder Lokalisierung von an den Elementen angebrachten RFID-Chips ausgebildet. Andererseits sind Fein-Detektormittel vorgesehen, die drei induktive Sensoren aufweisen, die in einer auf die Abmessungen der zu verschweißenden Elemente angepassten geometrischen Konfiguration an der Schweißeinrichtung positioniert sind. Grundsätzlich sind für die Realisierung der Grob- und Fein-Detektormittel - auch in Abhängigkeit von der Materialwahl der Befestiger - auch andere Wirkprinzipien einsetzbar, speziell Ultraschall- oder Funkwellenreflexionsverfahren o. ä.

Speziell in der optionalen Ausführung für einen wahlweise teil-automatischen Betrieb ist der Schweißroboter insbesondere mit Anzeigemitteln zur Anzeige der Feinpositionierung der Schweißeinrichtung bezüglich des schweißbaren Elementes und/oder zur Anzeige von Prozessparametern, wie der Schweißtemperatur, des Anpressdrucks beim Schweißen, der Schweißdauer, des Anpressdrucks beim Kühlen oder der Kühldauer ausgestattet. Derartige Anzeigemittel erlauben es auch dem wenig qualifizierten Bediener, die Schweißvorgänge schnell und positionsgenau sowie mit optimalen Fügeparametern auszuführen.

### Kurze Beschreibung der Zeichnung

Vorteile und Zweckmäßigkeiten der Erfindung ergeben sich im Übrigen aus der nachfolgenden Beschreibung von Ausführungsbeispielen und -aspekten, teilweise anhand der Figuren. Von diesen zeigen:
- Fig. 1: eine schematische Querschnittsdarstellung eines Flachdachaufbaus,
- Fig. 2: eine schematische Draufsicht auf ein Flachdach der in Fig. 1 dargestellten Art,
- Fig. 3: eine schematische Darstellung wesentlicher Komponenten und Sub-Komponenten des erfindungsgemäßen Verfahrens und eines erfindungsgemäßen Schweißroboters,
- Fig. 4A und 4B: eine schematische Draufsicht bzw. perspektivische Darstellung einer Ausführungsform des erfindungsgemäßen Schweißroboters,
- Fig. 5: eine schematische Draufsicht auf Schweißroboter-Segmente,
- Fig. 6A und 6B: eine schematische Draufsicht bzw. perspektivische Darstellung einer Ausführungsform des erfindungsgemäßen Schweißroboters,
- Fig. 7A und 7B: eine schematische Draufsicht bzw. perspektivische Darstellung einer Ausführungsform des erfindungsgemäßen Schweißroboters,
- Fig. 8A und 8B: zwei perspektivische Darstellungen eines Ausführungsbeispiels und
- Fig. 9: eine skizzenartige synoptische Darstellung von Detektor- und Auswertungsmitteln weiterer Ausführungen des erfindungsgemäßen Schweißroboters.

### Weg zur Ausführung der Erfindung

Fig. 2 zeigt schematisch eine Draufsicht des Eckenbereiches eines Flachdachs 1, welches gemäß Fig. 1 konstruiert ist. Es ist zu erkennen, dass die Abdichtung 9 aus miteinander verschweißten Kunststoffbahnen 9a ausgeführt ist, unter denen eine reguläre Anordnung aus Befestigern 7 liegt. Die Anordnung der Befestiger 7 in den kantennahen Bereichen des Flachdachs 1 unterscheidet sich von der Anordnung in einem zentralen Bereich, wo weniger Befestiger vorhanden sind. Überdies ist in der Praxis die Anordnung häufig nicht im gleichen Maße regulär wie im Verlegeplan (also in Fig. 2), weil aufgrund sonstiger - in der Figur nicht dargestellter - Konstruktionsdetails des Bauwerks Lageabweichungen der Befestiger erforderlich werden oder solche Lageabweichungen einfach aufgrund mangelnder Sorgfalt bei der Bauausführung vorkommen.

Ungeachtet solcher beabsichtigter oder unbeabsichtigter Abweichungen vom Verlegeplan soll die Abdichtung 9 korrekt mit allen Befestigern 7 verschweißt werden. Das erfordert die exakte Feststellung von deren tatsächlicher Lage und die Platzierung jeweils einer Schweißstelle in dieser tatsächlichen Position jedes Befestigers. Dies wird mit dem erfindungsgemäßen Verfahren und durch Einsatz eines erfindungsgemäßen Schweißroboters gewährleistet.

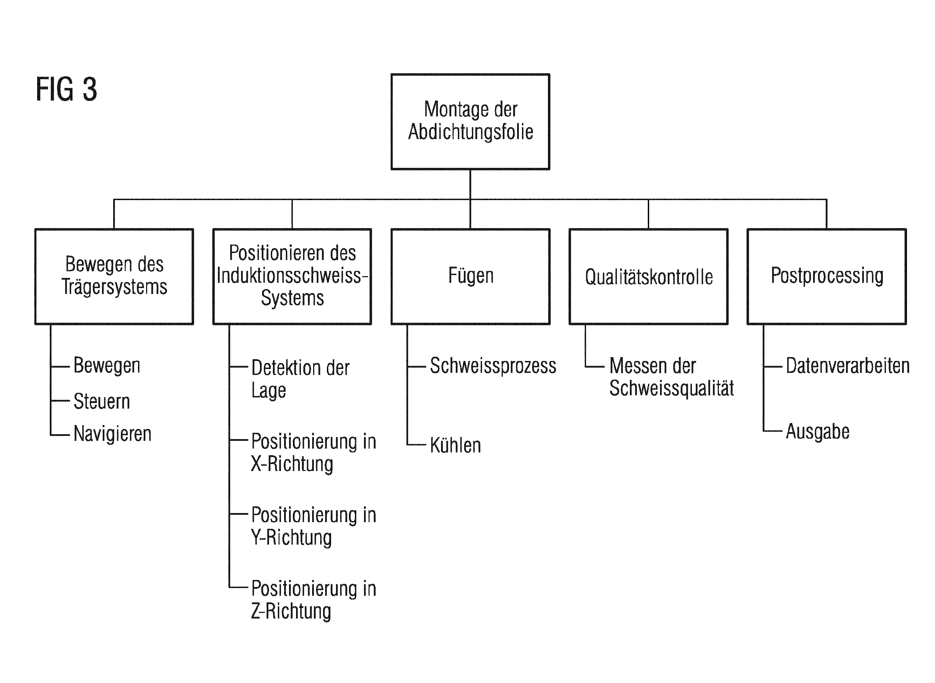

Fig. 3 illustriert in Art eines Blockdiagramms unter Verfahrensaspekten wesentliche Komponenten (Schritte und Teil-Schritte) eines erfindungsgemäßen Verfahrens und gibt zugleich, unter Vorrichtungsaspekten, eine Darstellung wesentlicher Funktionskomponenten und -elemente eines zu dessen Ausführung ausgebildeten Schweißroboters. Aufgrund der Beschriftung ist diese Figur selbst-erklärend und wird daher hier nicht weiter erläutert.

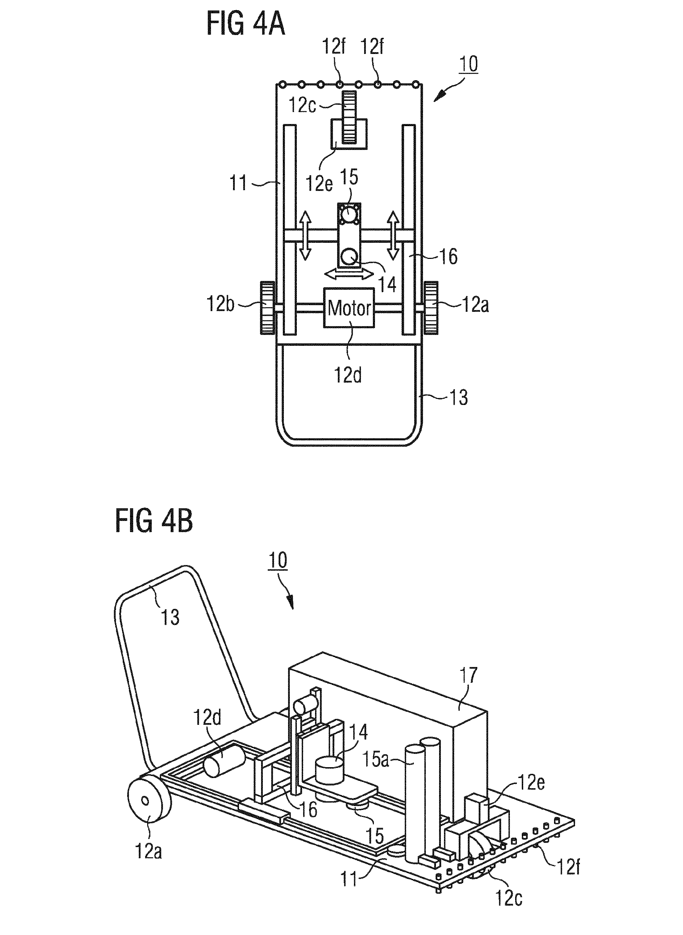

Fig. 4A und 4B zeigen in einer Draufsicht bzw. perspektivischen Ansicht einen Schweißroboter 10 gemäß einer Ausführungsform der Erfindung, mit wesentlichen Funktionskomponenten. Ein Fahrwerk 11 des Schweißroboters 10 trägt zwei an einer starren Achse fest angebrachte Hinterräder 12a, 12b und ein einzelnes, lenkbares Vorderrad 12c. Ein Elektromotor 12d ist zum Antrieb nicht lenkbaren Hinterräder 12a, 12b, vorgesehen. Dem lenkbaren Vorderrad 12c ist eine Navigations- und Lenkeinheit 12e zugeordnet. Zu dieser Baugruppe gehörende induktive Sensoren 12f und sind an der Vorderkante des Fahrwerks 11 angebracht. Am Fahrwerk ist zudem ein Führungsbügel 13 zum manuellen Führen der Vorrichtung angebracht.

Das Fahrwerk trägt eine Induktionsschweißeinrichtung 14 und eine Anpress- und Kühleinrichtung 15, jeweils mit zugehöriger (hier nicht gezeigter) Sensorik, die auf einer xy-Positionierungseinrichtung (Linearachsensystem) relativ zum Fahrwerk 11 in ihrer Position einstellbar angebracht sind. Eine Magnetspeicher- und Ausstoßeinrichtung 15a, die funktional zur Anpress- und Kühleinrichtung 15 gehört, ist hingegen ortsfest auf dem Fahrwerk angeordnet. Diese Teile realisieren ein auf Magnetkraft und Wärmeleitung beruhendes Prinzip des Anpressens der Abdichtungsfolie an die Befestiger an den Schweißstellen und Kühlens der Schweißstellen, wobei metallische Magnete geeigneter Größe aus einem Magazin auf die Schweißstellen verbracht werden, dort durch Magnetkraft unter Druckausübung auf die Schweißstelle haften und zugleich Wärme aus dieser abführen und später wieder eingesammelt werden.

Gleichfalls ortsfest ist auf dem Fahrwerk ein Steuerschrank 17 angebracht, der Stromversorgungs-, Sensorik-Datenaufbereitungs- und Steuerkomponenten enthält, die weiter unten genauer bezeichnet werden.

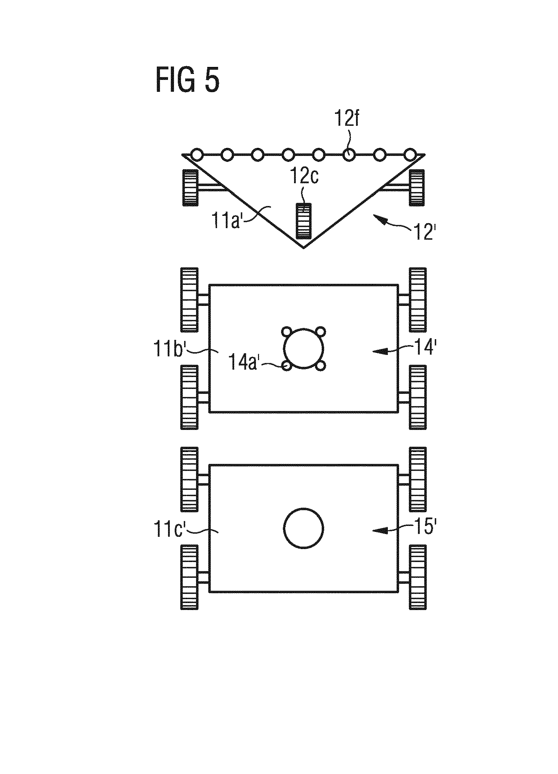

Fig. 5 ist eine Konzept-Skizze, die wesentliche Funktionseinheiten des in Fig. 4A und 4B gezeigten Schweißroboters als relativ selbstständige Einheiten zeigt. Hierzu zählt eine Navigations- und Lenkeinheit 12', mit dem bereits erwähnten lenkbaren Rad 12c und zum Navigationssystem gehörenden Sensoren 12f. Die Navigations- und Lenkeinheit 12' hat in dieser Darstellung einen selbstständigen Fahrwerksteil 11a'. Als weitere selbstständige Geräteeinheit ist eine Füge-Einheit 14' mit zugehöriger Sensorik 14a' und einem eigenen Fahrwerk 11 b' gezeigt. Als weitere relativ selbstständige Einheit ist eine Anpress- und Kühleinheit 15' gezeigt, und zwar ebenfalls mit einer eigenen Fahrwerkskomponente 11 c'. Diese Figur soll neben der funktionalen Grundstruktur des Schweißroboters auch verdeutlichen, dass hinsichtlich der Montage dieser Funktionskomponenten auf einem zusammenhängenden Fahrgestell oder auf mehreren relativ selbstständigen Einheiten verschiedene Optionen bestehen.

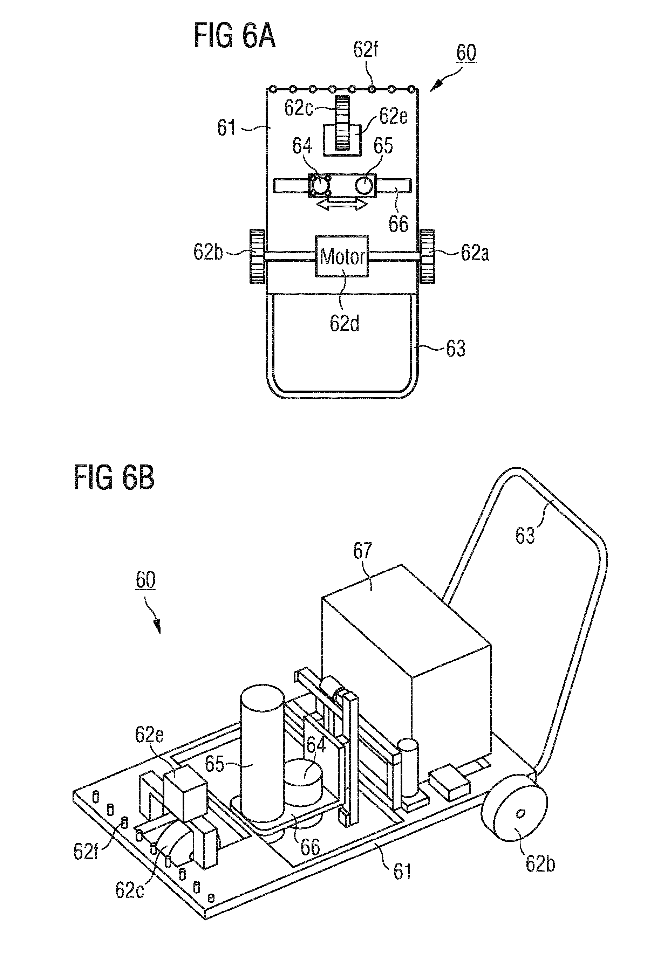

Fig. 6A und 6B zeigen einen Schweißroboter 60, der einen grundsätzlich ähnlichen Aufbau wie der Schweißroboter 10 aus Fig. 4A und 4B hat und dessen Komponenten mit Bezugsziffern bezeichnet sind, die an die dortige Bezeichnung angelehnt sind. Auch der Schweißroboter 60 hat ein dreirädriges Fahrwerk 61 mit einem einzelnen lenkbaren Vorderrad 62c, dem eine Navigations- und Lenkeinheit 62e mit zugehöriger Induktions-Sensorik 62f zugeordnet ist. Anders als bei der oben beschriebenen Ausführung, gibt es hier jedoch nur als Positionierungseinrichtung eine einachsige Führung 66 der Induktionsschweißeinrichtung 64 und Anpress- und Kühleinrichtung 65 im Fahrwerk 61. Die diesbezüglich etwas unterschiedliche Darstellung in den Figuren 6A und 6B verdeutlicht, dass die beiden wichtigsten Funktionskomponenten des Roboters, nämlich die Induktionsschweißeinrichtung und die Anpress- und Kühleinrichtung, in Fahrwerks-Längsrichtung entweder nebeneinander (Fig. 6A) oder hintereinander (Fig. 6B) positioniert sein können.

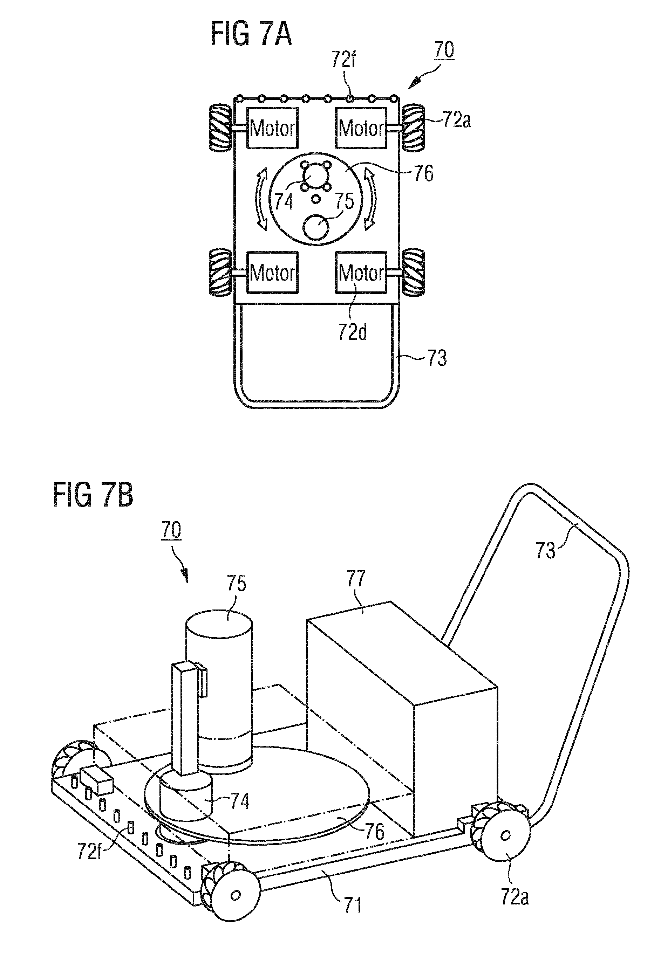

Fig. 7A und 7B zeigen als weiteres Ausführungsbeispiel einen Schweißroboter 70, wiederum mit an Fig. 4A/4B und 6A/6B angelehnten Bezugsziffern für die wichtigsten Komponenten. Die wesentlichen Unterschiede gegenüber den oben beschriebenen Ausführungen bestehen darin, dass der Schweißroboter 70 ein vierrädriges Fahrwerk 71 mit Allradantrieb durch vier Elektromotoren 72d und mit Spezialrädern 72a (sog. omnidirektionalen Rädern bzw. Mecanum-Rädern) und anstelle einer Linearführung einen Drehtisch 76 für die Induktionsschweißeinrichtung 74 und die Anpress- und Kühleinrichtung 75 aufweist.

Es ist darauf hinzuweisen, dass neben den in Fig. 4A bis 7B gezeigten Ausführungen des Fahrwerks und von Mitteln zur Fein-Positionierung der Schweißeinrichtung und der Anpress- und Kühleinrichtung auf dem Fahrwerk vielgestaltige weitere Ausführungen mit unterschiedlichen Lenkungs- und Antriebsprinzipien, u. a. auch unter Einsatz von Fahrraupen oder Schlittenkufen, möglich sind. Es versteh sich, dass auch verschiedenartige Mittel zu einer manuellen Führung des Roboters im Stand der Technik verfügbar sind.

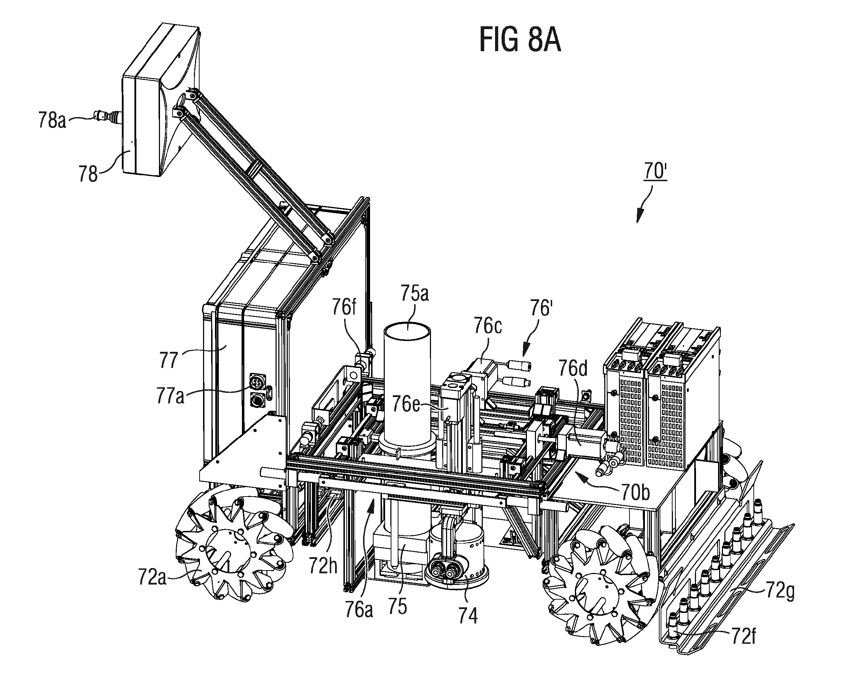

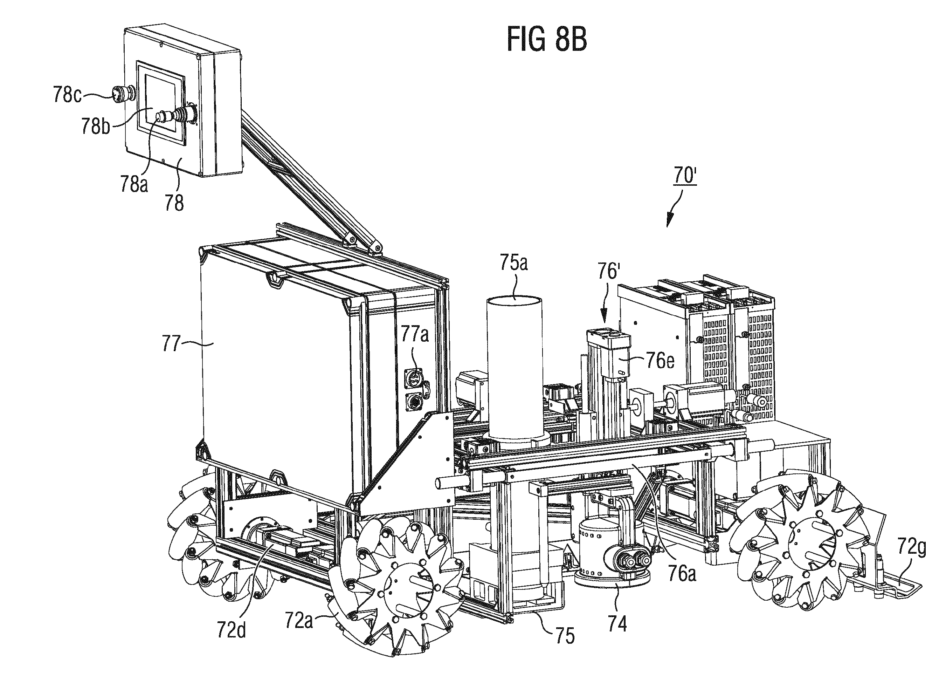

Fig. 8A und 8B sind zwei perspektivische Darstellungen eines weiteren Ausführungsbeispiels der Erfindung, und zwar eines Schweißroboters 70', dessen Grundaufbau ähnlich demjenigen des oben erläuterten Schweißroboters 70 nach Fig. 7A und 7B ist. Für übereinstimmende Teile werden die gleichen Bezugsziffern wie in Fig.7A und 7B benutzt, und diese Teile werden hier nicht nochmals erläutert.

Eine erste Abweichung beim Schweißroboter 70' besteht im Vorhandensein eines Anzeige- und Steuerpanels 78 mit einem Joystick 78a, einem Anzeigefeld 78b und einem Not-Ausschalter 78c an der Steuereinheit 77. Des Weiteren weist die Steuereinheit zusätzlich Anschlussbuchsen 77a für zusätzliche (Hand)-Schweißgeräte auf. Weiterhin ist an der Vorderkante des Schweißroboters 70' eine Andruck- und Schutzleiste 72g zum Andrücken der Dichtungsfolienbahn, auf der sich der Schweißroboter im Einsatzfall bewegt, auf den Untergrund und zum Schutz der Sensoren 72f vorgesehen. Als Bestandteil der Anpress- und Kühleinrichtung 75 ist hier eine Magnetspeicher- und Ausstosseinrichtung 75a separat bezeichnet.

Anders als bei der Ausführung nach Fig. 7A und 7B gelöst und genauer dargestellt ist hier die Technik zur Feinpositionierung der Schweißeinrichtung 74 und der Anpress- und Kühleinrichtung 75: Hierzu dient eine als Dreiachsen-Verstelleinheit ausgeführte Feinpositioniereinheit 76', von der als wesentliche Teile eine x-Achsen-Linearführung 76a, eine y-Achsen-Linearführung 76b mit den entsprechenden Stellmotoren 76c, 76d und eine Hubeinrichtung 76e zur z-Achsen-Verstellung der Induktionsschweißeinrichtung 74 und der Anpress- und Kühleinrichtung 75 einzeln bezeichnet sind. Eine Fahrwerkskomponente zum Ausgleich von Verdrehungen bei Niveauunterschieden der Räder ist mit 72h und zugehörige Dämpfer am Fahrwerk sind mit 72i bezeichnet. In Fig. 8B ist auch einer der den Mecanum-Rädern 72a zugeordneten Antriebsmotoren 72d zu erkennen.

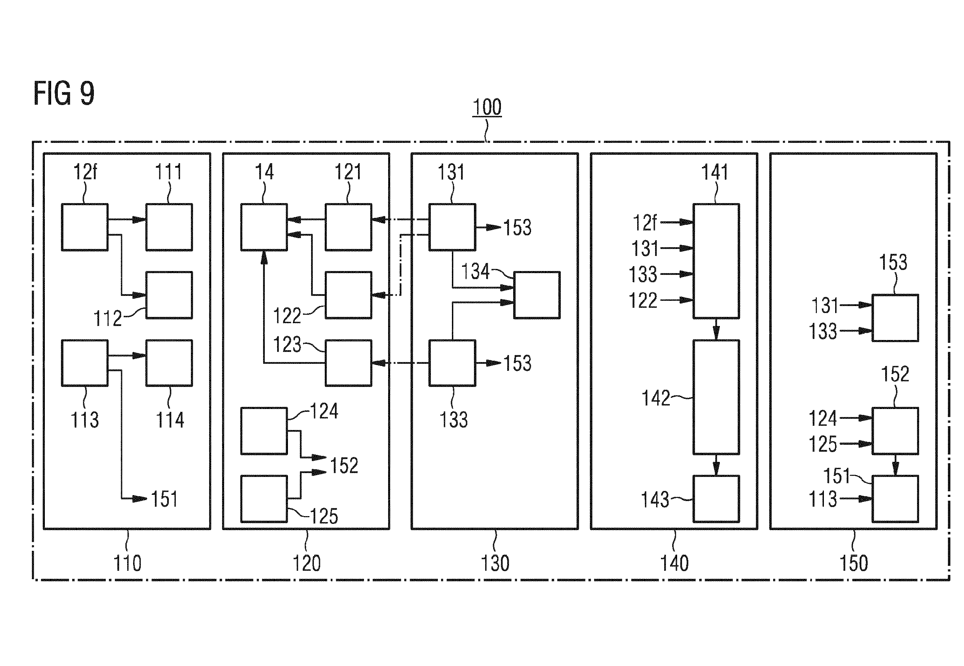

Fig. 9 gibt eine schematische, synoptische Darstellung von Sensorik- und Datenverarbeitungs-Komponenten des vorgeschlagenen Schweißroboters, die teilweise in den Figuren 4A bis 7B nicht zu erkennen oder bei den dort gezeigten Ausführungen nicht vorgesehen sind. Soweit die Komponenten in Fig. 4A und 4B bereits gezeigt sind, sind in Fig. 8 die bereits dort benutzten Bezugsziffern verwendet.

Die relevanten Sensorik- und Datenverarbeitungselemente des in dieser synoptischen Darstellung mit Bezugsziffer 100 bezeichneten Schweißroboters lassen sich grundsätzlich einer Positionierungs-Komponente 110, einer Füge-Komponente 120, einer Qualitätskontroll-Komponente 130, einer Datenaufbereitungs-/Speicherkomponente 140 und einer Anzeige-Komponente 150 zuordnen. Aus Gründen der Übersichtlichkeit wurde in der Figur auf die vollständige Darstellung der mannigfachen Signalverbindungen zwischen diesen Komponenten und ihren Elementen verzichtet; es sind lediglich einige besonders wichtige Verbindungen dargestellt.

Die Positionierungs-Komponente 110 umfasst induktive Sensoren 12f als Grob-Detektormittel zum Auffinden von unter einer Materialbahn unsichtbar verteilten Elementen (siehe dazu weiter oben, speziell die Beschreibung zu Fig. 1 und 2), die mit Signaleingängen einer Lenk-Steuerung 111 und einer Antriebs-Steuerung 112 zum selbsttätigen Anfahren der detektierten Elemente verbunden sind. Des Weiteren umfasst die Positionierungs-Komponente 110 Fein-Detektormittel 113, die ebenfalls als induktive Sensorik (insbesondere mit einer Mehrzahl von induktiven Nahfeld-Sensoren) ausgebildet sein können. Diese erfassen nach dem Anfahren eines der unsichtbaren Elemente präzise die Ausrichtung der Schweißeinrichtung des Schweißroboters bezüglich dieses Elementes. Die Fein-Detektormittel 113 sind mit einem Detektorsignaleingang einer Koordinatensteuereinheit 114 verbunden, die die Schweißeinrichtung und die Anpress- und Kühleinrichtung durch entsprechende Antriebssteuerung der zugeordneten Linearführung (Fig. 4A und 6A) bzw. eines Drehtisches (Fig. 7A) in die optimale Füge- bzw. Anpress- und Kühlposition bringt. Den Fein-Detektormitteln 113 ist auch eine spezielle Feinpositionsanzeige 151 in der Anzeige-Komponente 150 zugeordnet.

In der Füge-Komponente 120 sind der Induktionsschweißeinrichtung 14 Temperatursteuermittel zur Steuerung der Fügetemperatur 121, eine Zeitsteuerung 122 und eine Drucksteuerung 123 zur Steuerung des Anpressdruckes beim Fügen zugeordnet. Die Qualitätskontroll-Komponente 130 umfasst, hierzu korrespondierend, einen T-Fühler 131 und mindestens einen Druckfühler 133, die beide im Sinne der Realisierung einer Temperatur- oder Druckregelung mit den Temperatur- und Drucksteuermitteln 121, 123 in der Füge-Komponente verknüpft sein können. Im Übrigen sind diese Sensormittel 131, 133 mit einer Auswertungseinrichtung 134 zu deren kombinierter Auswertung gemäß einem vorgespeicherten Qualitätsbestimmungsalgorithmus verbunden.

Die Füge-Komponente 130 umfasst in der beispielhaft dargestellten Ausführung auch eine Druckerfassungseinrichtung 124 und eine Zeiterfassungseinrichtung 125 zur Erfassung des Anpressdruckes beim Kühlen der Schweißstelle und der Einwirkungsdauer des Anpressdruckes. Speziell in der o. a. Ausgestaltung der Erfindung, bei der der Anpressdruck durch das Auflegen von geeigneten Magneten auf die Schweißstelle bereitgestellt wird, ist eine sensorische Druckerfassung vorgesehen, da bei einer fehlerhaften Schweißstelle der Druckwert dem aufgrund der Magnetparameter zu erwartenden Sollwert abweicht. Hierbei ist die Anpress- und Kühlzeit durch die Zeitspanne vom Auflegen des Magneten auf die entsprechende Schweißstelle bis zu dessen Entfernung von dieser gegeben. Zur korrekten Bemessung dieser Zeitspanne, also um eine vorzeitige Entfernung der Magnete von den Schweißstellen zu vermeiden, wird zweckmäßigerweise auch die Temperatur während des Abkühlens überwacht. Die Daten der Erfassungsmittel 124, 125 werden auf einer speziellen Anzeige 152 der Anzeige-Komponente 150 zur Anzeige gebracht, ebenso wie die Schweißtemperatur und der Anpressdruck beim Schweißen in einer Anzeige 153 angezeigt werden.

In der Datenaufbereitungs-/Speicherkomponente 140 sind lediglich allgemein eine Datenaufbereitungseinrichtung 141, eine Datenspeichereinrichtung 142 und eine Datenausgabe-Schnittstelle 143 dargestellt, die die wesentlichen Funktionsabschnitte jener Komponente bilden, wobei bei der Datenaufbereitungseinrichtung 141 eingangseitige Signalverbindungen zu weiter oben erwähnten Detektormitteln gezeigt sind. Wie weiter oben bereits angemerkt, ist hiermit weder eine vollständige Darstellung noch die Aussage beabsichtigt, dass die Daten aller angegebenen Detektormittel notwendigerweise für ein Post-Processing aufbereitet und gespeichert werden müssen.

Die Ausführung der Erfindung ist nicht auf die oben erläuterten Beispiele und Aspekte beschränkt, sondern ebenso in einer Vielzahl von Abwandlungen möglich, die im Rahmen fachmännischen Handelns liegen.

**Bezugszeichenliste**

| | |
|---|---|
| 1 | Flachdach |
| 3 | Tragkonstruktion |
| 5 | Wärmedämmung |
| 7 | Befestiger |
| 7a | Druckscheibe |
| 9 | Abdichtung |
| 9a | Kunststoffbahn |
| 10; 60; 70; 70'; 100 | Schweißroboter |
| 11;61;71 | Fahrwerk |
| 12, 12b, 12c; 62a, 62b, 62c; 72a | Rad |
| 12d; 62d; 72d | Elektromotor |
| 12e;62e | Navigations- und Lenkeinheit |
| 12f; 62f; 72f | induktive Sensoren |
| 13; 63; 73 | Führungsbügel |
| 14; 64; 74 | Induktionsschweißeinrichtung |
| 15; 65; 75 | Anpress- und Kühleinrichtung |
| 15a; 75a | Magnetspeicher- und Ausstoßeinrichtung |
| 16; 66; 76; 76' | Positionierungseinrichtung (Führung bzw. Drehtisch) |
| 17;67;77 | Steuerschrank |
| 72 | Andruck- und Schutzleiste |
| 72h | Niveauausgleichsmittel |
| 76a | x-Achsen-Linearführung |
| 76b | y-Achsen-Linearführung |
| 76c, 76d | Stellmotor |
| 76e | Hubeinrichtung |
| 76f | Dämpfer |
| 77a | Anschlussbuchse |
| 78 | Anzeige- und Steuerpanel |
| 78a | Joystick |
| 78b | Anzeigefeld |
| 78c | Not-Ausschalter |
| 110 | Positionierungs-Komponente |
| 111 | Lenk-Steuerung |
| 112 | Antriebs-Steuerung |
| 113 | Fein-Detektormittel (induktive Sensorik) |
| 114 | Koordinatensteuereinheit |
| 120 | Füge-Komponente |
| 121 | Temperatursteuermittel |
| 122 | Zeitsteuerung |
| 123 | Drucksteuerung |
| 124 | Druckerfassungseinrichtung |
| 125 | Zeiterfassungseinrichtung |
| 130 | Qualitätskontroll-Komponente |
| 131 | T-Fühler |
| 133 | Druckfühler |
| 134 | Auswertungseinrichtung |
| 140 | Datenaufbereitungs-/Speicherkomponente |
| 141 | Datenaufbereitungseinrichtung |
| 142 | Datenspeichereinrichtung |
| 143 | Datenausgabe-Schnittstelle |
| 150 | Anzeige-Komponente |
| 151 | Feinpositionsanzeige |
| 152 | Anzeige (für Anpressdruck und -dauer) |
| 153 | Anzeige (für Schweißtemperatur und Schwei β-Anpressdruck) |

## Patentansprüche

1. Verfahren zur Herstellung einer abgedichteten Fläche eines Bauwerkes, die Kunststoffbahnen aufweist, die durch Befestiger (7) mit jeweils einer thermoplast- oder hotmelt-beschichteten Druckscheibe (7a) auf einer Tragkonstruktion (3) fixiert sind,
wobei zur Verschweißung der Kunststoffbahnen mit den Druckscheiben ein Schweißroboter (10; 60; 70; 70'; 100) eingesetzt wird, der mindestens innerhalb einer Kunststoffbahn selbsttätig die Druckscheiben detektiert, zu diesen hin fährt, eine Schweißeinrichtung (14; 64; 74) relativ zu den Druckscheiben positioniert und die Verschweißung ausführt und optional die Schweißstelle für eine vorbestimmte Zeitspanne mechanisch belastet und zugleich kühlt.

2. Verfahren nach Anspruch 1, zur Herstellung eines Flachdaches (1), das eine Wärmedämmung (5) mit Dämmplatten und eine über den Dämmplatten und Druckscheiben der Befestiger liegende Abdichtung (9) aus mit den Druckscheiben verschweißten Kunststoffbahnen (9a) aufweist.

3. Verfahren nach Anspruch 1 oder 2, wobei eine Qualitätskontrolle der Schweißverbindungen selbsttätig ausgeführt wird.

4. Verfahren nach Anspruch 3, wobei die Qualitätskontrolle ausgeführt wird, indem selbsttätig die Schweißtemperatur und an mehreren Stellen jeder Druckscheibe der Anpressdruck der Schweißeinrichtung erfasst und ausgewertet wird.

5. Verfahren nach Anspruch 3, wobei selbsttätig die jeweilige Schweißstelle auf Zug belastet und eine Zugbelastungskennlinie erfasst und ausgewertet oder der Befestiger (7) akustisch oder mechanisch zu Schwingungen angeregt und das Schwingungsverhalten ausgewertet oder vor sowie nach der Schweißung die Dicke der Kunststofffolie (9) über dem Befestiger gemessen und die Differenz beider Werte ausgewertet wird.

6. Verfahren nach einem der vorangehenden Ansprüche, wobei prozessrelevante Daten, insbesondere zu den Koordinaten der Schweißstellen und zur Qualität der Schweißverbindungen, im Schweißroboter (10; 60; 70) zur Nachverarbeitung aufbereitet gespeichert werden.

7. Verfahren nach einem der vorangehenden Ansprüche, wobei der Schweißroboter (10; 60;70;100) selbsttätig an einem Kunststoffbahn-Ende zu einer benachbarten Kunststoffbahn (9a) fährt.

8. Schweißroboter (10; 60; 70; 70'; 100) der aufweist:
- ein drei- oder vierrädriges und/oder mit Fahrraupen versehenes Fahrwerk (11; 61; 71),
- einen Elektroantrieb (12; 62d; 72d) für die Räder (12a; 12b; 62a; 62b; 72a) oder Fahrraupen des Fahrwerks,
- eine auf dem Fahrwerk angeordnete Schweißeinrichtung (14; 64; 74), die zum punktuellen Verschweißen einer Materialbahn (9a) mit darunter liegenden schweißbaren Elementen (7a) ausgebildet ist,
- ein Navigationssystem (12e; 62e; 72e) zur Positionssteuerung des Fahrwerks, wobei das Navigationssystem Grob-Detektormittel (12f; 62f; 72f) zum Auffinden der über einer Arbeitsfläche unter der Materialbahn unsichtbar verteilten Elemente aufweist, und Mittel (131 - 134) zur selbsttätigen Qualitätskontrolle der Schweißverbindungen.

9. Schweißroboter nach Anspruch 8, weiter aufweisend:
- eine Anpress- und Kühleinrichtung (15; 65; 75) zum Ausüben eines Anpressdrucks auf Schweißstellen zwischen der Materialbahn und jeweils einem darunter liegenden Element und zum Kühlen derselben, mit einer Zeitsteuerung zur Steuerung einer Anpress- und Kühlzeitspanne.

10. Schweißroboter nach Anspruch 8 oder 9, mit Positionsjustierungsmitteln (16; 66; 76; 76'; 114) zur Feinpositionierung der Schweißeinrichtung relativ zu jeweils einem der schweißbaren Elemente (7a), wobei die Positionsjustierungsmittel Fein-Detektormittel (113) zur Erfassung der Elementkontur aufweisen.

11. Schweißroboter nach einem der Ansprüche 8 - 10, wobei die Mittel zur Qualitätskontrolle einen Temperaturfühler (131) zur Erfassung der Schweißtemperatur und mindestens einen, bevorzugt mehrere Druckfühler (133) zur Erfassung des Anpressdruckes an der Materialbahn über jeweils einem schweißbaren Element (7a) sowie eine mit dem Temperaturfühler und dem oder jedem Druckfühler verbundene Auswertungseinrichtung (134) zur kombinierten Auswertung der Temperatur- und Drucksignale gemäß einem vorgespeicherten Qualitätsbestimmungsalgorithmus aufweisen.

12. Schweißroboter nach einem der Ansprüche 8 bis 11, mit Daten-Aufbereitungsmitteln zur Aufbereitung prozessrelevanter Daten, insbesondere zur Position der Schweißstellen und zur Qualitätskontrolle, und zu deren Speicherung im Schweißroboter sowie einer Schnittstelle zur Ausgabe der gespeicherten Daten.

13. Schweißroboter nach einem der Ansprüche 8 - 12, wobei die Schweißeinrichtung (14; 64; 74) als Induktionsschweißeinrichtung ausgebildet ist, der Temperatursteuermittel (121) zur Steuerung der Schweißtemperatur, eine Zeitsteuerung (122) zur Steuerung der Schweißdauer sowie eine steuerbare Anpresseinrichtung (123) zur Erzeugung eines steuerbaren Anpressdruckes der Schweißeinrichtung zugeordnet sind.

14. Schweißroboter nach Anspruch 13, wobei die Zeitsteuereinrichtung (122) Berechnungsmittel zur Berechnung der Schweißdauer aufgrund von Temperatursignalen eines Temperaturfühlers (131) zur Erfassung der Schweißtemperatur aufweist.

15. Schweißroboter nach einem der Ansprüche 8 - 14, wobei die Grob-Detektormittel (12f; 62f; 72f) des Navigationssystems (12e; 62e; 72e) als roboter-lokale Messmittel zur Positionserfassung der Elemente durch Induktion, mechanische Abtastung oder Lokalisierung von an den Elementen angebrachten RFID-Chips ausgebildet sind.

16. Schweißroboter nach einem der Ansprüche 10 - 15, wobei die Fein-Detektormittel (113) mindestens drei induktive Sensoren aufweisen, die in einer auf die Abmessungen der zu verschweißenden Elemente angepassten geometrischen Konfiguration an der Schweißeinrichtung (14; 64; 74) positioniert sind.

17. Schweißroboter nach einem der Ansprüche 8 - 16, mit Steuermitteln (13; 63; 73) zum manuellen Steuerungseingriff mindestens in den Vorgang des Hinfahrens zu einem schweißbaren Element bzw. einer Schweißstelle.

18. Schweißroboter nach einem der Ansprüche 8 - 17, mit Anzeigemitteln (151) zur Anzeige der Feinpositionierung der Schweißeinrichtung bezüglich des schweißbaren Elementes und/oder Anzeigemitteln (152; 153) zur Anzeige von Prozessparametern, wie der Schweißtemperatur, des Anpressdrucks beim Schweißen, der Schweißdauer, des Anpressdrucks beim Kühlen oder der Kühldauer.
